**Europäisches Patentamt**

**European Patent Office**

**Office européen des brevets**

(11) Publication number: **0 300 836**
**A2**

# (12) EUROPEAN PATENT APPLICATION

(21) Application number: **88306834.8**

(22) Date of filing: **25.07.88**

(51) Int. Cl.⁴: **C 08 L 67/02**
**C 08 J 5/18, B 29 C 47/88**

(30) Priority: **23.07.87 BG 80693/87**

(43) Date of publication of application:
**25.01.89 Bulletin 89/04**

(84) Designated Contracting States:
**CH DE ES FR GB IT LI NL**

(71) Applicant: **SU "KLIMENT OHRIDSKI"**
**Boul. Ruski**
**Sofia (BG)**

(72) Inventor: **Avramova, Nadka Vassileva**
**Komplex Mladost-4 Block 444-A**
**Sofia (BG)**

**Avramov, Issak Avramov**
**Komplex Mladost-4 Block 444-A**
**Sofia (BG)**

**Fakirov, Stoyko Hristov**
**Komplex Hypodrauma Block 108-E**
**Sofia (BG)**

**Schultz, Jerold Marvin**
**Dpt. Chemical Engineering University of Delaware**
**Newark Delaware 19716 (US)**

(74) Representative: **Silverman, Warren et al**
**HASELTINE LAKE & CO. Hazlitt House 28 Southampton**
**Buildings Chancery Lane**
**London WC2A 1AT (GB)**

(54) **High elasticity modulus thermoplastic polymer material.**

(57) A High elasticity modulus thermoplastic polymeric material is formed by mixing polyethylene terephthalate and polybutylene in a weight ratio of 10:90 to 90:10. The amorphous product obtained therefrom by rapid quenching can be oriented at room temperature in a draw ratio of up to 5:1 and then thermally annealed to produce a product having an elasticity modulus of up to 5550MPa and a tensile strength of up to 240MPa.

EP 0 300 836 A2

**Description**

## HIGH ELASTICITY MODULUS THERMOPLASTIC POLYMER MATERIAL

This invention relates to high elasticity modulus thermoplastic polymeric material based on polyethylene terephthalate (PET) and polybutylene terephthalate (PBT).

It is known that orientation of polymers improves substantially their mechanical properties. (See, for example the publication in Russian "Ultra-high modulus Polymers", Chimija Leningrad 1983). Two-stage drawing of PET at ambient temperature followed by annealing at a temperature close to the melting point thereof results in a high degree of orientation (15-20 : 1). (See K.Slusallek, H.G. Zachmann, Kolloid Z.Z. Polymere, 251, (1973) 865; Angew, Makromol. Chem. 53 (1976) 35). This also leads to an improvement in the mechanical strength of the polymer. An increase in the degree of orientation can also be achieved by increasing the molecular weight of polycondensation polymers through additional solid state polycondensation. (See K.Slusallek et al (supra) and also S.Fakirov, E.W.Fischer, IUPAC Intern. Symp. on Makromol., Aberdeen, 1974, Abstr. Book 85).

The known materials still suffer disadvantages due to the fact that their elasticity moduli are not sufficiently high and to achieve moduli as high as possible requires high energy consumption.

An object of the invention is to provide a thermoplastic polymeric material based on PET with higher elasticity modulus and tensile strength than those of known materials.

According to the present invention, there is provided a high elasticity modulus thermoplastic polymeric material which is a mixture of polyethylene terephthalate (PET) and polybutylene terephthalate (PBT) in a ratio of from 10:90 to 90:10 parts by weight and is in the amorphous state. The amorphous structure of the polymeric material may be attained by melting of the mixture of PET and PBT at a temperature of 290-330°C and rapid quenching of a film formed from the melt in a bath with a temperature between 0 and -194°C.

Pure amorphous PBT crystallises quite rapidly at ambient temperature due to its low glass transition temperature. Pure amorphous PET crystallises quite slowly at ambient temperature but is brittle and cannot be oriented, i.e. drawn. The material according to the invention which represents a mixture of both polymers and is in an amorphous state largely retains this state, in use, and at the same time it is capable of being oriented at ambient temperature by being subjected to a draw ratio of up to 5:1.

Subsequent crystallisation of the already oriented material to produce a product having an elasticity modulus of up to 5550 MPa, generally 4000 to 5540 MPa and a tensile strength of up to 250 MPa, generally 220 to 248 MPa, is achieved by isothermal treatment (annealing) with free, or more preferably with fixed ends at a temperature in the range of 120 - 180°C (more preferably 170°C) in an inert atmosphere or vacuum for 30 to 180 minutes (more preferably 60 minutes). Annealing at the lower limit of the above mentioned temperature range can be carried out in air, too.

The advantages of the material according to the invention are due to the fact that it preserves its amorphous state at ambient temperature and for this reason it can be oriented in a draw ratio amounting to 5:1, at ambient temperature. After additional isothermal treatment, this material, which can be based on commercially available PBT and PET, has a tensile strength that is 3-4 times higher and an elasticity modulus that is 2-4.7 times higher than that of pure commercially available PET and PBT. Furthermore its preparation requires little energy consumption.

The following Example illustrates this invention.

## EXAMPLE

Commercially available PET and PBT (pellet or powder form) are mixed in a weight ratio of 40:60 or 50:50, or 60:40 in different experiments, and then subjected to melting at 310-320°C. The melt is extruded through a die with a flow rate of 15-20 g/min onto metal rolls rotating at 0.5-2 Hz immersed in a cooling bath having a temperature between -100 and -194°C. A continuous film is obtained, its thickness depending on the distance between the rolls (0.015 - 0.15 mm). Strips (5 - 8 cm long) of this film are oriented at ambient temperature to a draw ratio of 5x. The oriented samples are isothermally annealed in an inert atmosphere or vacuum at 170°C for 60 minutes. The results of physicomechanical testing of the material produced as well as of commercial PBT and PET are presented in the Table which follows:

**0 300 836**

<div align="center">T a b l e</div>

| Parameter | PET+PBT (according to the invention) | PBT (Hoechst, FRG) | PET (Hoechst, FRG) |
|---|---|---|---|
| **I. Nonoriented** | | | |
| 1. Elasticity modulus (MPa) | 800-1000 | 970 | 1100 |
| 2. Tensile strength (MPa) | 140-160 | 40 | 55 |
| 3. Relative elongation at break (%) | 400 | 400-430 | 280-320 |
| **II. Oriented** | | | |
| 1. Elasticity modulus (MPa) | 3000-3500 | | |
| 2. Tensile strength (MPa) | 250-165 | - | - |
| 3. Relative elongation at break (%) | 20-80 | | |
| **III. Oriented and then annealed** | | | |
| 1. Elasticity modulus (MPa) | 4000-5540 | 1160 | 2300 |
| 2. Tensile strength (MPa) | 220-248 | 150-260 | 220 |
| 3. Relative elongation at break (%) | 15-20 | 30 | 40 |

## Claims

1. A high elasticity modulus thermoplastic polymeric material which is a mixture of polyethylene terephthalate (PET) and polybutylene terephthalate (PBT) in a ratio of from 10:90 to 90:10 parts by weight and is in the amorphous state.

2. A polymeric material as claimed in claim 1, which has been oriented at ambient temperature in a draw ratio of up to 5:1.

3. A polymeric material as claimed in claim 2, which has been subjected to isothermal annealing and possesses an elasticity modulus of up to 5540 MPa and a tensile strength of up to 250 MPa.

4. A polymeric material as claimed in claim 3, which possesses an elasticity modulus of from 4000 to 5540 MPa and a tensile strength of from 220 to 248 MPa.

5. A method for the production of a high elasticity modulus thermoplastic polymeric material as claimed in claim 1, which comprises mixing the PET and PBT in a weight ratio of from 10:90 to 90:10, melting the mixture at from 290-330°C and rapidly quenching a film formed from the melt in a quenching bath at a temperature of from 0 to -194°C.

6. A method for the production of an oriented thermoplastic polymeric material, which comprises mixing PET and PBT in a weight ratio of from 10:90 to 90:10 parts by weight, melting the mixture at from 290 - 330°C and rapidly quenching a film formed from the melt in a quenching bath at a temperature of from 0 to -194°C, orienting the film then obtained in a draw ratio of up to 5:1 and crystallising the drawn material by isothermal treatment at a temperature of from 120-180°C.

7. A method as claimed in claim 6, wherein the isothermal treatment is carried out in a vacuum or an inert atmosphere.

<div align="center">3</div>

8. A method as claimed in claim 7, wherein the isothermal treatment is carried out at a temperature of about +120°C in an oxygen containing atmosphere.

9. A method as claimed in any one of claims 6 to 8, wherein the isothermal treatment is carried out over 30 to 180 minutes.